# EUROPÄISCHE PATENTANMELDUNG

(11) **EP 0 976 450 A1**
(43) Veröffentlichungstag der Anmeldung: **02.02.2000**
(21) Anmeldenummer: 99114303.3
(22) Anmeldetag: 21.07.1999
(51) Int. Cl.: B01J 31/20, B01J 23/89, B01J 35/10, B01J 37/02, B01J 37/08, B01J 29/03

(54) **Bimetallische Kupfer-Ruthenium-Trägerkatalysatoren mit hoher Sinterstabilität und Verfahren zu deren Herstellung**

(30) Priorität: 31.07.1998 DE 19834568
(71) Anmelder: Aventis Research & Technologies GmbH & Co. KG, 65926 Frankfurt am Main (DE)
(72) Erfinder: Hagemeyer, Alfred, Dr., 48431 Rheine (DE); Werner, Harald, Dr., 61350 Bad Homburg (DE); Dingerdissen, Uwe, Dr., 64342 Seeheim-Jugenheim (DE); Kühlein, Klaus, Prof. Dr., 65779 Kelkheim (DE); Thomas, John Meurig, Prof. Sir, Cambridge, CB2 1 QY (GB)

(57) **Zusammenfassung**

Trägerkatalysatoren mit hoher Sinterstabilität enthaltend eine oder mehrere Edelmetall-Cluster-Carbonyl-Verbindungen der Formel (1)

[RuₐCu_{b}L_{c}(CO)ₓ]ⁿ⁻Aⁿ⁺

worin
L für einen oder mehrere, gegebenenfalls voneinander verschiedene neutrale oder anionische Liganden und
(A)ⁿ⁺ für eines oder mehrere Kationen, die die Ladung des Komplexes ausgleichen steht.
Die Verbindungen der Formel (1) sind in den Poren eines mesoporösen Trägermaterials angeordnet.
Der Katalysator kann aktiviert werden, indem die Verbindungen der Formel (1) durch eine thermische, photolytische oder chemische Nachbehandlung in die metallische Form überführt werden.

Die erfindungsgemäßen Katalysatoren eignen sich insbesondere für folgende Reaktionen: Hydrierung, Dehydrierung, Oxidation organischer Verbindungen oder Peroxid-Zersetzung.

## Beschreibung

Die vorliegende Erfindung betrifft Trägerkatalysatoren auf der Basis von Kupfer-Ruthenium-Carbonylverbindungen, ein Verfahren zur Herstellung dieser Katalysatoren sowie deren Verwendung zur Hydrierung, Dehydrierung oder Oxidation organischer Verbindungen oder Peroxid-Zersetzung.

Es besteht erhebliches Interesse an der Bildung, Struktur und katalytischen Anwendung von mono- und bimetallischen Nanoteilchen und Clustern, seit in Bimetallic Catalysts, Wiley, New York, 1983 und Int. Rev. Phys. Chem. 7, 1988, 281 die hervorragenden katalytischen Eigenschaften von Aluminiumoxid-geträgerten Ru-Cu, Pt-Ir und Pt-Re Systemen bei Reformierverfahren gezeigt wurden.

Neben den konventionellen keramischen Katalysatorträgern mit breiter Porenradienverteilung, wie beispielsweise SiO₂, Al₂O₃, TiO₂ und ZrO₂, werden dank der leichten Zugänglichkeit durch Hydrothermalsynthesen verstärkt auch rein mesoporöse Materialien mit Porendurchmessern im Bereich von 2,5 bis 10 nm als Träger eingesetzt, wie beispielsweise in Current Opinion in Solid State and Material Science, 1, 1996, 76 und Current Opinion in Colloid Science, 1, 1996, 523 offenbart.

Es sind auch Verfahren bekannt, katalytisch aktive Zentren innerhalb solcher Mesoporen anzuordnen. In Nature, 378, 1995, 159, Angew. Chem. Int. Ed. Engl. 35, 1996, 2787 und Faraday Discuss. 105, 1996, 1 werden solche Verfahren offenbart, beispielsweise die Anordnung von Ti(IV) Ionen verankert über Si-O-Bindungen. Es sind zahlreiche Methoden offenbart, Edelmetalle und Edelmetallcluster auf inerte keramische Träger, ebenfalls auf die genannten mesoporösen Träger, aufzubringen, um Trägerkatalysatoren für Hydrierungen und Oxidationen herzustellen. Übersichten finden sich beispielsweise in Clusters and Colloids, VCH, Weinheim, 1994; Heterogeneous Catalysis, Clarendon Press, Oxford, 1987; Catalytic Chemistry, Wiley, New York, 1992, und Metal Clusters in Catalysis, Elsevier, Amsterdam, 1986. Die nach den Verfahren des Standes der Technik erhaltenen Katalysatoren sind zwar in der Anfangsphase ihrer Benutzung aktiv, jedoch deaktivieren sie rasch, da die Fixierung der Edelmetall-Nanoteilchen und Edelmetallcluster auf dem Träger unzureichend ist, und die Primärteilchen durch Sintervorgänge zu größeren Teilchen mit nur noch geringer katalytischer Oberfläche agglomerieren.

Das gegenwärtige Interesse an bimetallischen Katalysatoren liegt in dem Potential für eine erhöhte Aktivität und Selektivität durch die komplementäre Wirkungsweise der Einzelmetalle begründet. Die konventionelle Präparation dieser Systeme durch Metallsalzabscheidung und anschließende Calcinierung, gefolgt von der Reduktion zu den niedervalenten Aktivmetallen ist nicht immer zuverlässig und reproduzierbar. Der größte Nachteil besteht in der fehlenden Kontrolle über Partikelgröße, Morphologie und Homogenität der resultierenden bimetallischen Nanopartikel. Diese Faktoren führen zusammen mit der Zufallsnatur des Trägers zu untragbaren Aktivitäts- und Selektivitätseinbußen. Außerdem deaktivieren die konventionell erhaltenen Katalysatoren relativ rasch, da die Fixierung der Edelmetall-Nanoteilchen und -Cluster auf dem Träger unzureichend ist und die Primärteilchen durch Sintervorgänge zu größeren Teilchen mit nur noch geringer katalytischer Oberfläche agglomerieren.

Die nicht vorveröffentlichte Deutsche Patentanmeldung **19712340.6** beschreibt Ag-Ru Trägerkatalysatoren durch Imprägnierung von MCM-41 mit Salz-Lösungen von Ag-Ru Cluster-Carbonylen. Die Cluster werden an die Oberflächen-Hydroxylgruppen des Trägers fest gebunden, so daß Sintern und damit Deaktivierung der Katalysatoren effektiv verhindert wird.

Die Herstellung von Trägerkatalysatoren durch Abscheidung und Thermolyse von Clustercarbonylen erlaubt eine präzise und kontrollierbare Herstellung geträgerter Nanoteilchen. Jedoch müssen die folgenden Kriterien bei der Auswahl der bimetallischen Cluster-Vorläufers beachtet werden.
Zunächst muß die Schutzhülle, die den metallorganischen Vorläufer umgibt und stabilisiert (z.B. CO-Liganden), leicht wieder entfernbar sein. Dazu kann die Thermolyse, Photolyse oder chemische Reduktion eingesetzt werden. Bei der erfindungsgemäßen bevorzugten Ru-Cu-Carbonylverbindung reicht eine milde Thermolyse aus.
Weiterhin muß die Ligandenhülle mit den funktionellen Gruppen der Oberfläche günstig wechselwirken, um eine gleichmäßige Verteilung des Vorläufers über die Trägeroberfläche sicherzustellen. Darüberhinaus müssen die Wechselwirkungen mit der Oberfläche stärker sein als die Solvatationskräfte oder die attraktiven Kräfte zwischen den Vorläuferspezies, damit die Agglomeration in kleine molekulare Kristallite und nachfolgendes Sintern auf der Oberfläche beim Entfernen der CO-Hülle unterdrückt wird.

Aufgabe der vorliegenden Erfindung war es daher, einen Katalysator bereitzustellen, der auch nach längeren Standzeiten noch eine hohe Aktivität besitzt und der sich durch eine gute Sinterstabilität auszeichnet, d.h. bei dem die Edelmetallcluster oder -Nanoteilchen auch nach dem Sintervorgang nicht zu größeren Teilchen agglomerieren.

Die vorliegende Erfindung löst diese Aufgabe durch die Bereitstellung neuer Trägerkatalysatoren mit hoher katalytischer Aktivität und Selektivität sowie ausgezeichneter Sinterstabilität, die die Nachteile, der bekannten Katalysatoren nicht besitzen, ein Verfahren zur Herstellung dieser Katalysatoren und deren Verwendung in organischen Reaktionen.

Es wurde nun gefunden, daß der Cu-Ru Carbonyl Cluster-Verbindungen, wie z.B. [Ru₆C(CO)₁₆Cu₂Cl]₂[PPN]₂, adsorbiert auf die inneren Wände des MCM-41, zu bimetallischen nanopartikulären Cu-Ru Katalysatoren führt, die noch leistungsfähiger sind als die Ag-Ru Analoga.

Die vorliegende Erfindung betrifft somit Trägerkatalysatoren mit hoher Sinterstabilität enthaltend eine oder mehrere Edelmetall-Cluster-Carbonyl-Verbindungen der Formel (1)

[RuₐCu_{b}L_{c}(CO)ₓ]ⁿ⁻Aⁿ⁺

worin
- L: steht für einen oder mehrere, gegebenenfalls voneinander verschiedene neutrale oder anionische Liganden;
- (A)ⁿ⁺: steht für eines oder mehrere Kationen, die die Ladung des Komplexes ausgleichen;
- a: ist eine ganze Zahl von 1 bis 147 vorzugsweise 2 bis 20;
- b: ist eine ganze Zahl von 1 bis 55; vorzugsweise 1 bis 10;
- c: ist eine ganze Zahl von 0 bis 200; vorzugsweise 0 bis 50;
- x: ist eine ganze Zahl von 1 bis 120; vorzugsweise 2 bis 100;
- n: steht für die Gesamtladung des Komplexes, die sich aus den einzelnen Ladungen der Bestandteile ergibt, die größer als 0 ist,
wobei die Verbindungen der Formel (1) in den Poren eines mesoporösenTrägermaterials angeordnet sind.

Bei den erfindungsgemäßen Kupfer-Ruthenium-Verbindungen kann die Ligandenhülle durch eine sehr milde Thermolyse bereits bei Temperaturen <200°C abgespalten werden.

Im Vergleich mit den in **19712340.6** beschriebenen Silber-Ruthenium-Verbindungen wird bei den erfindungsgemäßen oxophileren Kupfer-Verbindungen eine bessere Verankerung am Trägermaterial bewirkt.

Der bimetallische Cluster [Ru₆C(CO)₁₆Cu₂Cl]₂[PPN]₂ wird erfindungsgemäß nach einer ähnlichen, aber verbesserten, Route gegenüber der literaturbekannten hergestellt, bei der man Hexaruthenium-Carbido-Carbonylat-Cluster mit dem Cu(I)-Salz [Cu(MeCN)₄BF₄] und nachfolgend mit Bis-(Triphenylphosphonyl)imminium-Chlorid (PPNCl) zur Reaktion bringt. Es wurde nun gefunden, daß die direkte Reaktion mit einem Überschuß an CuCl in THF unter Rückfluß bessere Ausbeuten liefert und die Reaktionsmischung einfacher aufzuarbeiten ist.

Als mesoporöse Hydroxylgruppen enthaltende Trägermaterialien kommen insbesondere Siliciumdioxid, Silicium-Mischoxide, Aluminiumoxide, Zirkonoxide oder Titanoxide in Frage.

So liegt der Porendurchmesser bei Verwendung von mesoporösen Siliciumdioxid (z.B. MCM41®, Firma Mobil) erfindungsgemäß beispielsweise im Bereich von 2 bis 50 nm, insbesondere im Bereich von 2,5 bis 30 nm.

Die Edelmetallcluster werden an den Oberflächen-Hydroxylgruppen des Trägermaterials fest gebunden, so daß verhindert wird, daß die Cluster durch Sintervorgänge agglomerieren und der Katalysator deaktiviert wird. Erfindungsgemäß kommt es bei hohen Metallbeladungen zum Aufbau regulärer Anordnungen der Edelmetallcluster in den Poren des Trägermaterials, wodurch die Aktivmetallbeladung deutlich erhöht werden kann, ohne den Verlust der guten Metalldispersionen durch Agglomerationsvorgänge befürchten zu müßen.

So liegt im Falle von Ruthenium z.B. der Wiederholungsabstand der regulär angeordneten Edelmetall-Cluster-Carbonyl-Verbindungen entlang der Mesoporenachse des Trägermaterials, bei Verwendung von MCM-41, im Bereich von 1,0 bis 5,0 nm, insbesondere im Bereich von 1,7 bis 2,7.

Die Imprägnierung des Trägers mit der Imprägnierlösung kann auf die nach dem Stand der Technik üblichen Arten erfolgen, beispielsweise durch Tränken, Tauchen, Aufspritzen, Aufsprühen oder Ultraschalldispersion. Die mono- oder bimetallischen Edelmetallcarbonyl-Komplexe werden aus Lösung auf dem Trägermaterial adsorbiert. Als Lösungsmittel kommen solche in Betracht, die mit den Kupfer-Ruthenium-Carbonylkomplexen nicht reagieren. Solche inerten Lösungsmittel sind beispielsweise aliphatische Ether, insbesondere Diethylether.

In einer bevorzugten Ausführungsform wird die Beladung des Trägers mit den anionischen Clustern dadurch erreicht, , daß die beiden Komponenten in Ether und einer geringen Menge eines zweiten Lösemittels, z.B. Methylenchlorid, in welchem das Cluster-Salz löslich ist, aufgeschlämmt werden.
Das zweite Lösungsmittel fungiert hier möglicherweise als Transportreagenz für den Transport der Cluster durch die Kanäle an der Oberfläche des Trägermaterials. Mit Hilfe dieses Verfahrens wird eine deutlich verbesserte Metalldispersion gegenüber den mit den herkömmlichen Verfahren hergestellten Katalysatoren, bei denen immer eine teilweise Blockierung der Poren und/oder Agglomeration zur Kristallisation des Clustersalzes beobachtet wurde, erreicht.

Der stöchiometrische Index a liegt vorzugsweise im Bereich von 2 bis 20, insbesondere im Bereich von 4 bis 16. Der stöchiometrische Index b liegt vorzugsweise im Bereich von 1 bis 10, insbesondere im Bereich von 2 bis 8.

Die erfindungsgemäßen Kupfer-Ruthenium-Carbonylkomplexe können neben den Cu und Ru und den CO-Gruppen gegebenenfalls noch weitere Liganden enthalten, es ist aber auch möglich, daß es reine Carbonylkomplexe ohne weitere Liganden sind.

Die Edelmetallcarbonylkomplexe können eine, 2, 3 oder 4 verschiedene chemische Spezies als anionische, insbesondere stark reduzierend wirkende Liganden L enthalten. Diese chemischen Spezies können beispielsweise C, N, S, C₂, F, Cl, Br, I, BF₄, Cyanid, Isocyanid, Cyanat, Isocyanat, CNO, Phosphine, Phosphinoxide, Arsine, Amine, gesättigte oder ungesättigte Alkyl-, Allyl- oder Arylreste, z.B. Cyclopentadienyl, sein, die neutral oder als Anionen vorkommen können.

Enthalten die Edelmetallcarbonylkomplexe eine chemische Spezies als Liganden, so gibt der stöchiometrische Koeffizient c seine Teilchenzahl an. Enthalten die Edelmetallcarbonylkomplexe mehr als eine chemische Spezies als Liganden, so bedeutet c für jede von ihnen die Teilchenzahl, die auch für die einzelnen Ligandentypen unterschiedlich sein kann. c bedeutet für jede chemische Spezies eine Zahl von 0 bis 200, insbesondere von 0 bis 50.

Die Zahl x der im Komplex enthaltenen CO-Gruppen liegt im Bereich von 1 bis 120, bevorzugt im Bereich von 2 bis 100, insbesondere im Bereich von 4 bis 50. Die Gesamtladung n der Komplexe hängt von der Summe der Ladungen ab, die die Metalle und die Liganden tragen, sie liegt bevorzugt im Bereich von -1 bis -10, insbesondere im Bereich von -1 bis -6.

Eine erfindungsgemäß bevorzugte Verbindung der Formel 1 ist z.B.:
(Ru₆C(CO)₁₆ Cu₂Cl)₂ (PPN)₂.

Die Ausbildung der erfindungsgemäßen geordneten Strukturen auf der Oberfläche des Trägermaterials basiert einerseits auf der chemischen Fixierung der Cluster und andererseits darauf, daß die Cluster durch Umgebung mit sterisch anspruchsvollen Gegenionen auf Abstand gehalten werden. So wird jeder Cluster auf der Trägermaterialoberfläche von zwei Gegenionen flankiert, so daß sich zwischen zwei Clustern zwei Gegenionen befinden.

Als Gegenionen [A]ⁿ⁺, die die Ladung des Edelmetallcarbonylkomplexes kompensieren, kommen ein oder mehrere verschiedene Ionen in Frage, die vorzugsweise einen Ionenradius von mindestens 0,5 nm, insbesondere von ≥ 1nm besitzen.

Bevorzugt ist die Verwendung von Ionen der Formel [R₄E]⁺ , worin R Wasserstoff, einen Alkylrest mit 1 bis 12 Kohlenstoffatomen, einen Arylrest mit 6 bis 12 Kohlenstoffatomen oder eine Amin- oder Imingruppe bedeutet, und E für N, P oder As steht. Weiterhin bevorzugt ist die Verwendung von Ionen der Formel (R₂N)⁺, worin N für Stickstoff steht und R für eine organische Gruppe steht, bevorzugt eine Phosphingruppe, wie z.B. Triphenylphosphin. Besonders bevorzugt ist die Verwendung von Tetraphenylarsonium- und Bis(triphenylphosphino)imminium-Kationen. Als Alkylreste werden speziell Methyl, Ethyl, Propyl, Butyl oder Cyclohexyl verwendet; als Arylreste insbesondere Phenylringe, die gegebenenfalls substituiert sein können.

Mit Hilfe des erfindungsgemäßen Verfahrens ist es möglich auf der Trägermetalloberfläche hohe Beladungen mit den erfindungsgemäßen Cluster-Salzen zu erzielen. So ist die Beladung, bei der Verwendung von MCM-41 als Trägermaterial, (definiert als mSalz/m MCM-41) erfindungsgemäß > 0,5, insbesondere im Bereich von 0,7 bis 3. Die Beladung errechnet sich aus den Einwaagen (m) von Salz und Trägermaterial bei der Trägerung der Cluster. Die Aktivmetallbeladung des fertigen Katalysators kann auch durch Atomspektroskopie experimentell ermittelt werden.

Die Aktivierung des Katalysators erfolgt, indem die Verbindungen der Formel (1) durch eine thermische, photolytische oder chemische Nachbehandlung unter Vakuum aktiviert wird. Die Entfernung der Carbonyl-Schutzhülle nach dieser Methode liefert "nackte" bimetallische Nanocluster, die die katalytischen Aktivzentren darstellen. Durch Abspaltung oder Zersetzung der Ligandenhülle werden die Metalloberflächen freigelegt und damit der ungehinderte Zugang der Reaktanden an die Oberfläche ermöglicht.

Die Aktivierung des Katalysator-Vorläufers wurde mit analytischen Methoden in-situ verfolgt und zeigt, daß die CO-Liganden im Temperaturbereich von 80°C bis 180°C abgespalten werden. Möglicherweise bleibt bei der milden Aktivierung das Carbidoatom im Zentrum der Ru-Oktaeder erhalten.

Die Strukturuntersuchung des Katalysators mittels FTIR, TEM, STEM, EXAFS, XANES und XRD (auch in-situ unter Reaktionsbedingungen während des Betriebes) zeigt, daß nach Entfernung der CO-Hülle wohldefinierte einheitliche bimetallische Nanoteilchen zurückbleiben, die über das oxophile zweite Metall (hier Cu) fest an der Trägeroberfläche verankert sind.

Bei weiter steigender Temperatur wird dann das Cluster-Kondensat langsam von der CO-Hülle entblößt.

Aus der Struktur der geträgerten Cu-Ru-Nanoteilchen wird das allgemeine Prinzip für die feste Verankerung an die Oberfläche deutlich: Das oxophile Cu wirkt als Haftvermittler für die kuppelförmig über der Cu-Monolage angeordneten Ru-Polyeder, nämlich über Cu-O-Si-Sauerstoffbindungen zum silica-Träger und über Ru-Cu-Metall-Metall-Bindungen zum Ru.

Zur Abspaltung des Liganden L wird der mit den Edelmetallclustern beladene Träger einem reduzierten Druck, bevorzugt unterhalb 200 torr, insbesondere unterhalb von 20 torr, speziell unterhalb 200 mtorr ausgesetzt. Bei Bedarf kann der Träger erwärmt werden, etwa auf Temperaturen zwischen 10 und 300°C, vorzugsweise 15 bis 220°C, insbesondere 40 bis 220°C. Das Erwärmen dauert im allgemeinen 10 Minuten bis 5 Stunden, bevorzugt 20 bis 180 Minuten und erfolgt bevorzugt unter Inertgas.

Die nach dem erfindungsgemäßen Verfahren hergestellten Katalysatoren können vor oder nach der Aktivierung durch mechanische Bearbeitung wie Pressen oder Zerkleinern in eine Form gebracht werden, die für ihre Verwendung als technische Trägerkatalysatoren vorteilhaft ist.

Eine besonders bevorzugte Ausführungsform der Erfindung ist ein Verfahren zur Herstellung eines Ruthenium-Kupfer-Katalysators, zu dessen Herstellung ein Siliziumdioxid-Träger mit einem Porendurchmesser von etwa 3 nm (7MCM 41, Mobil) mit Verbindungen, die die Ruthenium-Kupfer-Cluster-Ionen (Ru₆C(CO)₁₆ Cu₂Cl)₂²⁻ enthalten, imprägniert wird. Bevorzugt werden die Ruthenium-Kupfer-Komplexe in Form einer Lösung ihres Bis-(Triphenylphosphino)imminium-Salzes (PPN) verwendet, d.h. das Gegenion ist PPN⁺.

Die erfindungsgemäßen Trägerkatalysatoren zeichnen sich durch ihre hohe katalytische Aktivität und Selektivität, verbunden mit hohen Standzeiten und einer guten Sinterstabilität aus und eignen sich insbesondere zur Hydrierung, Dehydrierung und Oxidation organischer Verbindungen oder Peroxid-Zersetzung.

### Beispiele

### Beispiel 1 : Synthese von [Ru₆C(CO)₁₆Cu₂Cl]₂[PPN]₂

0.5 g [Ru₆C(CO)₁₆][PPN]₂ wird in 20 ml THF für 5h mit einem Überschuß CuCl (1.0 g) am Rückfluß erhitzt. Die Reaktionsmischung wird gekühlt, gefiltert und es wird ein Überschuß an Bis-(Triphenylphosphino)imminiuchlorid (PPNCl) zugegeben. Das Lösungsmittel wird im Vakuum abgezogen und die Mischung in CH₂Cl₂ gelöst und mit Ethanol überschichtet, wobei tiefrote Kristalle entstehen. Diese werden isoliert und mit Ethanol und Pentan gewaschen. Es werden 385 mg [Ru₆C(CO)₁₆Cu₂Cl]₂[PPN]₂ erhalten.
IR n_{co} 2059(m), 2021(vs), 2967(sh), 1947(sh), 1855(w.sh), 1829(br.w) cm⁻¹

### Beispiel 2 : Zersetzungsfreie Adsorption auf MCM-41

Der mesoporöse Träger MCM-41 (120 mg) wird unter Vakuum getrocknet (0.01 mm Hg) bei 473 K für 6h, dann mit trockenem Lösungsmittel gewaschen und erneut unter Vakuum bei 473 K getrocknet. Der Träger wird dann mit 30 ml trockenem Ether aufgeschlämmt und läßt dann das Cu-Ru Cluster-Salz [Ru₆C(CO)₁₆Cu₂Cl]₂[PPN]₂ (50 mg Cluster für 57 mg MCM41, d.h. 47 Massen-% Cluster-Salz) zusammen mit 0.1 ml CH₂Cl₂ bei Raumtemperatur unter Ausschluß von Licht für 72h einwirken. Der erhaltene rosafarbene Feststoff wird mit 10 ml Ether gewaschen und unter Vakuum (0.01 mm Hg) bei Raumtemperatur für 4h getrocknet.
IR(Nujol) für MCM41/[Ru₆C(CO)₁₆Cu₂Cl]₂[PPN]₂:
   n_{co} 2058(s), 2011(vs), 1997(vs), 1981(s), 1912(sh.m), 1958(w), 1948(w), 1968(w.br), 1835(m.br), 1822(w.br) cm⁻¹

Die Beladung entspricht einer ungefähren Bedeckung von ca. 1 Cluster pro 50.000 A².

### Beispiel 3 : Katalysatoraktivierung durch Thermolyse von MCM41/[Ru₆C(CO)₁₆Cu₂Cl]₂[PPN]₂

Eine genau eingewogene Menge von MCM41/[Ru₆C(CO)₁₆Cu₂Cl]₂[PPN]₂ wird in ein aus Al-Folie geformtes Töpfchen innerhalb eines mit Ar gefüllten Schlenk-Rohres eingefüllt. Die Vorrichtung wird dann für 2h bei 453 K unter Vakuum (0.01 mm Hg) erhitzt. Anschließend wird der Apparat mit Ar oder H₂ gespült und der gekühlte Katalysator in die Reaktionskammer transferiert.

### Beispiel 4 : Hydrierung von Hexen-1 (Batch-Versuche)

Ein 150 ml mit Teflon ausgekleideter Autoklav, ausgerüstet mit Magnetrührer, wird mit 8 mg Katalysator, 3.0 ml Hexen-1 und 64 bar H₂ beaufschlagt. Es wird bei 373 K für 4h erhitzt. Anschließend wird der Reaktor auf Raumtemperatur abgekühlt und das Produktspektrum mit 1H-NMR analysiert. Es wird eine 99+ %-ige Umsetzung zu n-Hexan gefunden.

Ein nachfolgender Batch-Versuch wird mit 12.0 ml Hexen-1 durchgeführt, um die Turn-over-Frequency (TOF) zu bestimmen. Dieser Versuch ergab 16.1% Umsetzung zu trans-Hexen-2, <1% Umsetzung zu cis-Hexen-2 und 46.5% Umsetzung zu Hexan. Damit ergibt sich eine TOF_{Isomerisierung} von 3.900 mol Hexan / mol Cu₄Ru₁₂ * h, eine TOF_{Hydrierung} von 10.600 mol Hexan / mol Cu₄Ru₁₂ * h und eine insgesamte TOF von mindestens 14.500 mol Hexan / mol Cu₄Ru₁₂ * h.

### Beispiel 5 : Hydrierung von Hexen-1 (Kinetik-Studie)

Ein 150 ml mit PEEK ausgekleideter Autoklav, ausgerüstet mit Magnetrührer, wird mit 10 mg Katalysator, 44.6 g (66.27 ml) Hexen-1 und 20 bar H₂ beaufschlagt. Es wird bei 373 K für 16h erhitzt. Anschließend wird der Reaktor auf Raumtemperatur abgekühlt. Alle 30 Minuten werden bei hohem Druck Proben genommen und mittels GC analysiert. Es wird über 3 Läufe gemittelt. Die Massenbilanz zeigt minimale Probenverluste. Die nachfolgende Tabelle 1 zeigt die Ergebnisse:

**Tabelle 1**

| Kinetikdaten für die Hexen-1-Hydrierung | | | | | |
|---|---|---|---|---|---|
| Zeit (min) | Umsatz (Gew-%) | H₂-Druck (bar) | Produktverteilung (Gew.-%) | | |
| | | | n-Hexan | cis-2-Hexen | trans-2-Hexen |
| 0 | - | 20 | - | - | - |
| 15 | 1.7 | 19 | 100 | - | - |
| 30 | 2.2 | 18 | 100 | - | - |
| 60 | 4.8 | 17 | 52.1 | 27.1 | 20.8 |
| 90 | 12.9 | 15.5 | 54.3 | 27.1 | 18.6 |
| 120 | 17.2 | 14.5 | 55 | 26.2 | 18.8 |
| 150 | 25.8 | 13 | 50.4 | 29 | 20.6 |
| 180 | 27.3 | 12 | 52.4 | 28.5 | 19.1 |
| 210 | 47.4 | 10 | 52.1 | 28.7 | 19.2 |
| 240 | 55.8 | 8.5 | 51.3 | 29.9 | 18.8 |
| 275 | 63.3 | 7 | 52 | 29.3 | 18.7 |
| 300 | 75.4 | 5 | 53.3 | 29.1 | 17.6 |
| 330 | 83.5 | 4 | 55.7 | 27.8 | 16.5 |
| 360 | 91.4 | 2.5 | 57.8 | 27 | 15.2 |
| 480 | 99.7 | 2 | 69 | 22.2 | 8.8 |

Man sieht, daß die Hydrierung von Hexen-1 von der Isomerisierung zu cis- und trans-Hexen-2 begleitet wird, welche dann im weiteren Verlauf der Reaktion (mit geringerer Geschwindigkeit) hydriert werden, weshalb die Selektivität zu n-Hexan nach 480 min nochmals ansteigt.
Ferner folgt aus der Kinetikstudie, daß eine Induktionsperiode von 60 Minuten durchlaufen wird und eine insgesamte TOF von 25.700 mol Hex / mol Cu₄Ru₁₂ * h erreicht wird.

### Beispiel 6 : Hydrierung von Diphenylacetylen

Ein 150 ml mit Teflon ausgekleideter Autoklav, ausgerüstet mit Magnetrührer, wird mit 7.1 mg Katalysator, 400 mg Diphenylacetylen, 1 ml Ethanol, 10 ml Pentan und 65 atm H₂ beaufschlagt. Es wird bei 393 K für 6d erhitzt. Anschließend wird der Reaktor auf Raumtemperatur abgekühlt und das Produktspektrum mit 1H-NMR und GC-MS analysiert. Es wird eine 66% Umsetzung zu trans-Stilben, >0.5% Umsetzung zu cis-Stilben und eine 33% Umsetzung zu Bibenzyl gefunden. >0.5% des nicht umgesetzten Ausgangsmaterials wird nachgewiesen. Aus diesen Meßergebnissen wird eine insgesamte TOF_{Hydrierung} von 16.8 mol DPA / mol Cu₄Ru₁₂ * h berechnet.

### Beispiel 7 : Hydrierung von Phenylacetylen

Ein 150 ml mit Teflon ausgekleideter Autoklav, ausgerüstet mit Magnetrührer, wird mit 12.0 mg Katalysator, 1 ml Phenylacetylen, 5 ml Pentan und 65 atm H₂ beaufschlagt. Es wird bei 373 K für 24h erhitzt. Anschließend wird der Reaktor auf Raumtemperatur abgekühlt und das Produktspektrum mit 1H-NMR und GC-MS analysiert. Es wird eine 99.9+% Umsetzung zu Ethylbenzol gefunden. Es wird kein unumgesetztes Ausgangsmaterial beobachtet. Aus diesen Meßergebnissen wird eine insgesamte TOF_{Hydrierung} von 615 mol PA / mol Cu₄Ru₁₂ * h berechnet (unter der Annahme, daß Styrol als Zwischenprodukt auftritt).

### Beispiel 8 : Hydrierung von trans-Stilben

Ein 150 ml mit Teflon ausgekleideter Autoklav, ausgerüstet mit Magnetrührer, wird mit 8.0 mg Katalysator, 400 mg trans-Stilben, 10 ml Pentan, 1 ml Ethanol und 65 atm H₂ beaufschlagt. Es wird bei 393 K für 48h erhitzt. Anschließend wird der Reaktor auf Raumtemperatur abgekühlt und das Produktspektrum mit 1H-NMR und GC-MS analysiert. Es wird eine 79% Umsetzung zu Bibenzyl gefunden. 21% nicht umgesetztes Ausgangsmaterial werden nachgewiesen. Aus diesen Meßergebnissen wird eine insgesamte TOF_{Hydrierung} von 69.5 mol Stil / mol Cu₄Ru₁₂ * h berechnet.

Die Beispiele 7 und 8 zeigen die hohe Selektivität des Katalysators, da nur die Seitenketten und nicht die Phenylringe hydriert werden.

### Beispiel 9 : Hydrierung von cis-Cyclookten

Ein 250 ml Erlenmeyerkolben, ausgerüstet mit Magnetrührer, wird mit 10.0 mg Katalysator, 10 ml cis-Cyclookten und 1 atm H₂ beaufschlagt. Das System wird bei 298 K für 72h gehalten. Anschließend wird das Produktspektrum mit 1H-NMR und GC-MS analysiert. Es wird kein unumgesetztes Ausgangsmaterial mehr nachgewiesen. Der Umsatz zu Cyclooktan ist quantitativ. Aus diesen Meßergebnissen wird eine insgesamte TOF_{Hydrierung} von 152 mol Cyclo-C8 / mol Cu₄Ru₁₂ * h berechnet.

Eine Kinetikstudie lieferte folgende Resultate:

| Reaktionszeit (h) | Umsatz zu Cyclooktan (%) |
|---|---|
| 0 | 0 |
| 4 | 2.5 |
| 28 | 45 |
| 52 | 100 |
| 68 | 100 |

### Beispiel 10 : Hydrierung von D-Limonen

Ein 150 ml mit Teflon ausgekleideter Autoklav, ausgerüstet mit Magnetrührer, wird mit 13.0 mg Katalysator, 1 ml D-Limonen und 65 atm H₂ beaufschlagt. Es wird bei 393 K für 23h erhitzt. Anschließend wird der Reaktor auf Raumtemperatur abgekühlt und das Produktspektrum mit 1H-NMR und GC-MS analysiert. Es wird eine 29% Umsetzung zu cis-1-Methyl-4-Isopropylcyclohexan, eine 34% Umsetzung zu trans-1-Methyl-4-Isopropylcyclohexan, eine >0.5% Umsetzung zu 1-Methyl-4-Isopropenylcyclohexan und eine 35% Umsetzung zu 1 -Methyl-4-Isopropylcyclohexen-1 gefunden. >1% nicht umgesetztes Ausgangsmaterial werden nachgewiesen. Aus diesen Meßergebnissen wird eine insgesamte TOF_{Hydrierung} von 362 mol D-Lim / mol Cu₄Ru₁₂ * h berechnet.

Man sieht, daß bevorzugt die äußere Doppelbindung in der Seitengruppe und nicht die innere Doppelbindung hydriert wird. Dieses Ergebnis erklärt sich durch die geringe Ausdehnung der Aktivzentren, die eine zweifache Bindung des Substrats unmöglich macht.

## Patentansprüche

1. Trägerkatalysatoren mit hoher Sinterstabilität enthaltend eine oder mehrere Edelmetall-Cluster-Carbonyl-Verbindungen der Formel (1)
[RuₐCu_{b}L_{c}(CO)ₓ]ⁿ⁻Aⁿ⁺
worin
L steht für einen oder mehrere, gegebenenfalls voneinander verschiedene neutrale oder anionische Liganden;
(A)ⁿ⁺ steht für eines oder mehrere Kationen, die die Ladung des Komplexes ausgleichen;
a ist eine ganze Zahl von 1 bis 147,
b ist eine ganze Zahl von 1 bis 55;
c ist eine ganze Zahl von 0 bis 200;
x ist eine ganze Zahl von 1 bis 120;
n steht für die Gesamtladung des Komplexes, die sich aus den einzelnen Ladungen der Bestandteile ergibt, die größer als 0 ist,
wobei die Verbindungen der Formel (1) in den Poren eines mesoporösenTrägermaterials angeordnet sind.

2. Trägerkatalysatoren nach Anspruch 1, dadurch gekennzeichnet, daß das Trägermaterial Hydroxylgruppen enthält, insbesondere daß es sich bei dem Trägermaterial um Siliciumdioxid, Silicium-Mischoxide, Aluminiumoxide, Zirkoniumoxide oder Titandioxide handelt.

3. Trägerkatalysator nach Anspruch 1 und/oder 2, dadurch gekennzeichnet, daß der Porendurchmesser des mesoporösen Trägermaterials im Bereich von 2,5 und 30 nm liegt.

4. Trägerkatalysator nach einem oder mehreren der Ansprüche 1 bis 3, dadurch gekennzeichnet, daß L für einen oder mehrere Liganden ausgewählt aus der folgenden Gruppe der chemischen Spezies steht C, N, S, C₂, F, Cl, Br, I, BF₄, Cynid, Isocyanid, Cyanat, Isocyanat, CNO, Phosphine, Phosphinoxide, Arsine, Amine, Alkyl (gesättigt und ungesättigt) oder Aryl (z.B. , Cyclopentadienyle) sind.

5. Trägerkatalysator nach einem oder mehreren der Ansprüche 1 bis 4, dadurch gekennzeichnet, daß das Gegenion(A)ⁿ⁺ einen Ionenradius von mindestens 0,5 nm, vorzugsweise ca. 1 nm besitzt.

6. Trägerkatalysator nach einem oder mehreren der Ansprüche 1 bis 5, dadurch gekennzeichnet, daß die Gesamtladung n der Edelmetallcarbonylkomplexe im Bereich von -1 bis -10, insbesondere im Bereich von -1 bis -6 liegt.

7. Trägerkatalysator nach einem oder mehreren Ansprüche 1 bis 6, dadurch gekennzeichnet, daß die Zahl x der im Edelmetallcarbonylkomplex enthaltenen Carbonylgruppen im Bereich von 2 bis 100 liegt.

8. Trägerkatalysator nach einem oder mehreren der Ansprüche 1 bis 7, dadurch gekennzeichnet, daß der Katalysator aktiviert wird, indem die Verbindungen der Formel (1) durch eine thermische, photolytische oder chemische Nachbehandlung in die entsprechenden mono- oder bimetallischen Edelmetalle M oder MN in ihre freie Form überführt werden.

9. Trägerkatalysator nach einem oder mehreren der Ansprüche 1 bis 8, dadurch gekennzeichnet, daß Formel 1 für [Ru₆C(CO)₁₆Cu₂Cl]₂[PPN]₂ steht.

10. Trägerkatalysator nach einem oder mehreren der Ansprüche 1 bis 9, dadurch gekennzeichnet, daß die Beladung (mSalz/m MCM-41) des Trägermaterials, bei Verwendung von MCM-41, mit den Edelmetall-Cluster-Salzen > 0,5 ist.

11. Verfahren zur Herstellung eines Trägerkatalysators gemäß mindestens einem der Ansprüche 1 bis 10 durch Imprägnieren eines hydroxylgruppenhaltigen Trägermaterials mit Verbindungen der Formel (1).

12. Verfahren nach Anspruch 11, dadurch gekennzeichnet, daß der Katalysator bei Drucken von unter 200 torr oder unter Inertgas und bei Temperaturen von 10 bis 300 °C, aktiviert wird.

13. Verfahren nach Anspruch 11 oder 12, dadurch gekennzeichnet, daß der Katalysator mit einer Lösung von [Ru₆C(CO)₁₆Cu₂Cl]₂²⁻ Ionen imprägniert wird.

14. Verwendung eines Trägerkatalysators gemäß mindestens einem der Ansprüche 1 bis 13 zur Hydrierung, Dehydrierung, Oxidation organischer Verbindungen oder Peroxid-Zersetzung.
